# EUROPEAN PATENT SPECIFICATION

(11) **EP 0 616 774 B1**
(45) Date of publication and mention of the grant of the patent: **03.12.1997**
(21) Application number: 94104249.1
(22) Date of filing: 18.03.1994
(51) Int. Cl.: A23G 9/02, A23G 3/00

(54) **A process for preparing a liquid food product**
Verfahren zur Herstellung eines flüssigen Nahrungsmittelproduktes
Procédé de production d'un produit alimentaire liquide

(30) Priority: 24.03.1993 CH 895/93
(43) Date of publication of application: 28.09.1994
(73) Proprietor: SOREMARTEC S.A., 6700 Arlon-Schoppach (BE); Ferrero S.p.A., I-12051 Alba (Cuneo) (IT); FERRERO OFFENE HANDELSGESELLSCHAFT m.b.H., D-60599 Frankfurt (DE)
(72) Inventor: Lelli, Angelo, I-12050 Racca - Guarene (Cuneo) (IT); Ferrero, Pietro, B-1640 Rhode-St-Genese (BE)
(74) Representative: Rambelli, Paolo

(56) References cited:
- EP-A- 0 191 487
- EP-A- 0 201 974

## Description

The present invention relates to a process for the preparation of a food product having a composition typical of ice cream but intended to be kept and eaten in a liquid state.

Ice cream is a food product which is greatly valued, both for its nutritional value and for its organoleptic properties, and which includes fats, proteins, carbohydrates and water and which is rendered solid or semi-solid by freezing and whipping in such a way that small bubbles of air or inert gas are incorporated into the mass of the ice cream itself. Thanks to the presence of small bubbles of gas, the ice cream melts quickly in the mouth, giving a pleasant, fresh sensation.

An extensive description of the technology and recipes for the preparation of conventional ice cream is given in the work of W.S. Arbuckle, The AVI Publishing Company Inc., 1977.

Research carried out by the Applicant has shown that the flavour and organoleptic properties of ice cream depend essentially on the proportion of "unfreezables" trapped in the fine structure of ice crystals and gas bubbles. These unfreezables are made up of all those elements which are dissolved, emulsified or dispersed in the initial aqueous phase and which only special ice cream manufacturing technology manages to distribute in a pleasing and harmonious manner.

A particular organoleptic effect on the receptors of the tongue and palate, linked to the high concentration of highly active substances (fats, proteins and sugars), is further enhanced by action that proteins exert at the interface of oil-in-water emulsions which improves the exchange between the "unfreezable portion" and the cell membranes of the receptors.

The original oil/gas/water emulsion loses its gas phase on melting, the "pure ice" phase is quickly absorbed by saliva, while the proteins concentrated at the solution of unfreezables/oil interface contribute to the formation of a new oil/unfreezable/saliva emulsion which is absorbed slowly by the receptors, thus pleasantly prolonging the flavour and organoleptic effect.

The object of the present invention is to provide a process which enables a food product to be produced which has the typical composition of ice cream, and therefore the same nutritional value, but is intended to be consumed as a drink in its liquid state, and which gives the consumer the same pleasant organoleptic sensation produced by conventional ice cream at the moment when the unfreezable portion, freed from the microbubbles of gas and the microcrystals of ice by the melting of the ice cream, comes into contact with the sensory receptors of the tongue, thereby being just as appealing to the consumer while avoiding the need to be stored frozen.

This object is achieved according to the invention by a process characterised in that it includes the steps of:
- preparing a basic mix having the typical composition of ice cream, including edible fats, proteins, carbohydrates and water,
- cooling this basic mix to below its freezing point, while whipping and injecting it with gas until an aerated intermediate mixture is obtained, and subsequently heating it to above its freezing point and de-aerating it until the intermediate mixture is once again in a substantially de-aerate liquid state and
- pasteurising or sterilising the product thus obtained, homogenising it and packaging it in sterile containers.

The finished product, obtained by the process according to the invention, has the typical composition of conventional ice cream with a fat content of from 4 to 18% by weight, and preferably an average fat content of from 4 to 12% by weight, with a protein content preferably between 3 and 7% and a sugar content in general up to 30% by weight, and preferably having a total solid residue of between 28 and 45% by weight, preferably between 30 and 38% by weight.

The fat may be made up either of dairy fats or of a mixture of dairy and vegetable fats. The dairy fats are preferably provided by the use of full-cream milk, cream and/or dairy butter. Full-cream milk is also the preferred basic ingredient for preparing the basic mix as it acts as a solvent for the other ingredients and forms the continuous phase of the emulsion of the basic mix, besides contributing to the protein and sugar (lactose) contents of the emulsion.

Should vegetable fats be used, it is preferable to use oils with a melting point of between 20 and 55°C, for example coconut oil, palm oil or palm nut oil. The ratio of dairy to vegetable fats, should the latter be used, is preferably between 1:1 and 2:1.

The protein content is made up essentially by the milk and/or cream and/or egg yolks.

In addition to lactose, the sugars used preferably include saccharose, dextrose and fructose.

The basic mix is prepared according to prior art techniques used in the preparation of a so-called ice cream mix which, as is known, is constituted by a complex colloidal system which includes an oil-in-water dispersion/emulsion with the sugars in solution and the insoluble proteins, any stabilisers and solid sweeteners in colloidal suspension. The fatty phase is in the form of dispersed globules.

The basic mix is prepared in an emulsifier, typically at from 55 to 65°C, at which temperature the fatty phase is liquid. Typically, milk at around 60°C is put into the emulsifier, after which the premixed soluble ingredients are added; the fat, if used, is generally added last and in the molten state.

The basic mix preferably includes conventional stabilisers and thickening agents, such as sodium alginate (0.01-0.3% by weight), carrageen (0.05-0.5% by weight), carboxymethyl cellulose (0.01-0.3% by weight), natural and modified starch, for example with adipic cross-linking (0.2-3% by weight), pectin with a low or medium methoxyl number, phosphates, agents for stabilising the protein phase (up to around 0.1% by weight). Even though the invention should not be seen as limited to the choice of particular stabilizing and thickening agents, the preferred ingredients for this purpose are carrageen and disodium phosphate.

If the intended finished product is one with an acidic pH, such as fruit ice cream, or ice cream made with a yoghurt or sour cream base, the stabilisers may include propylene glycol alginate.

At the end of any resting period, the basic mix thus obtained is fed to a freezer, preferably of a continuous type, where it is cooled rapidly while being whipped and injected with air or nitrogen so as to obtain the classic three-phase emulsion structure of conventional ice cream. The cooling time and temperature depend on the type of freezer used, according to the literature (See the text cited earlier). In a continuous process, the output temperature typically ranges from -6 to -9°C.

According to one inventive characteristic of the process of the invention, the aerated product removed from the freezer, which generally has an overrun of 50-90%, is fed to a heat exchanger, preferably of a type with a scraped surface, where it is heated to above its melting point, to a temperature generally between 40 and 60°C. The product, thus returned to a liquid state, is then degassed in a continuous degasifier at subatmospheric pressure so as substantially to remove the gaseous phase incorporated in the freezing step. The degassing temperature is generally between 40 and 60°C.

The further treatment stages of the product include the known steps of pasteurisation or sterilisation and subsequent cooling and homogenisation of the product.

In the preferred embodiment, the product is subjected to a thermal pre-treatment in scraped-surface heat exchangers at a temperature of between 100 and 110°C for a period of the order of 10-4 seconds and to a final sterilisation treatment, preferably carried out at a temperature of between 130 and 150°C for a period of 15 to 2 seconds.

After sterilisation, the product is cooled rapidly to a temperature preferably between 65 and 80°C and homogenised in a conventional homogeniser at a pressure of between 70 and 200 bar.

After this final homogenisation step, the product is cooled in scraped-surface heat exchangers and forwarded to an aseptic holding tank where it is maintained at a temperature of between 25 and 35°C before being packaged under aseptic conditions.

It is thought that the operations of freezing and subsequent melting and degassing result in an alteration in the structural characteristics of the emulsion which are thought to be responsible for the particular organoleptic properties, described earlier, of the unfreezable phase of conventional ice cream when it loses the gas and microcrystals of ice on the surface of the tongue. Although the phenomena which occur during this treatment have not been fully elucidated, and the Applicant does not wish to be bound to any particular explanation of these mechanisms, it is presumed that this treatment is responsible for a denaturisation of the seroproteins similar to that obtained through a heat treatment. The alteration in the structural characteristics of the emulsion has been checked, in particular, by checking the viscosity of an emulsion, this being determined at various stages in the process in comparison with the viscosity of an emulsion having an identical composition, but which has not been subjected to the steps of freezing, melting and degassing. In every comparative test it was found that the treatment described above results in a substantial reduction in the viscosity of the finished product.

This variation in viscosity, which is one measure of the desired organoleptic improvement in the product, is greater the higher the concentration, expressed as total solid residue, of the basic mix intended to be treated in the freezer. Therefore, in its preferred embodiment, the process according to the invention includes the preparation of a concentrated basic mix having a total solid residue which is around 1.1-1.5 times the final desired total solid residue, and the subsequent dilution of the aerated intermediate product obtained from the freezing step with an aqueous diluent, preferably full-cream milk, in the quantity necessary to bring the total solid residue to the final desired value. The aqueous diluent is generally heated, preferably to a temperature of between 60 and 85°C so as to liquefy the intermediate mix at the same time.

### Example 1

A concentrated mix was prepared having the following composition by weight:

| Ingredients | % in dose |
|---|---|
| full-cream milk | 61.44 |
| saccharose | 21.25 |
| dextrose | 3.75 |
| fondant | 2.5 |
| cocoa powder (22% cocoa butter) | 5 |
| egg yolk | 3.75 |
| skimmed milk powder | 1.25 |
| P100 carrageen | 0.019 |
| kelgin "F"^{R} | 0.037 |
| Na₂HP0₄ | 0.062 |
| flavouring | to 100 |
| Total fat content | 4.9% |
| Total sugar content | 30.6% |
| Total protein content | 4.35% |
| Total solid residue | ^{∼} 41% |

The mix was subjected to the following treatments:
Forming of the emulsion at 60°C in an emulsifier for 5 minutes;
Freezing in a continuous freezer: timing 7.5-8 minutes;
Output temperature: -6°C ö -9°C;
Addition of full-cream milk warmed to 80°C in a ratio of 1:4 (one part of milk to four parts of mix);
Degassing in a vacuum degasifier at 45-50°C;
Heat pre-treatment: 110°C for 5.5 seconds;
Final heat treatment: 134°C for 11.5 seconds;
Homogenisation at 70°C at 120 bar.

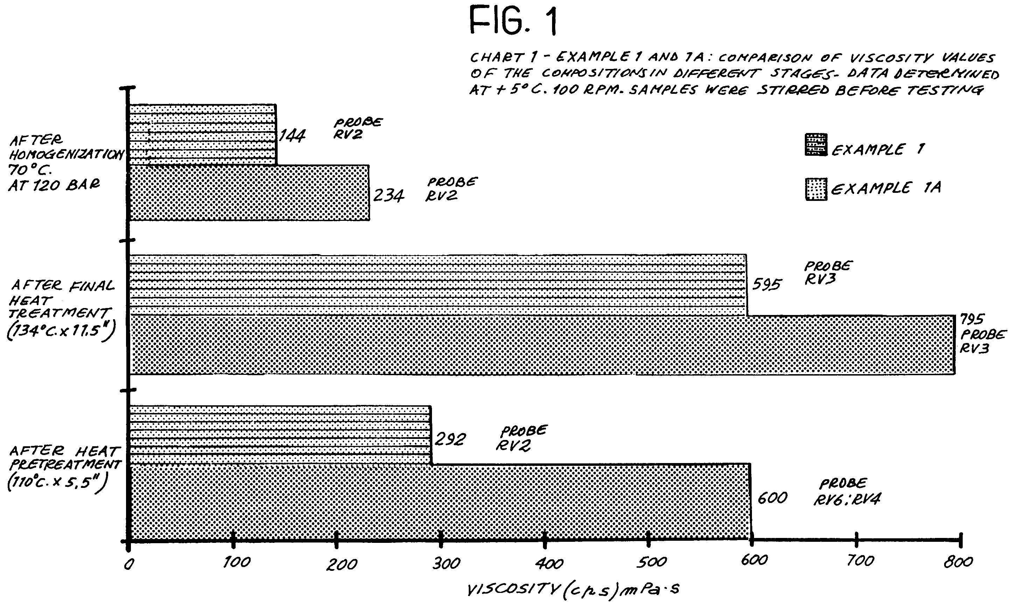

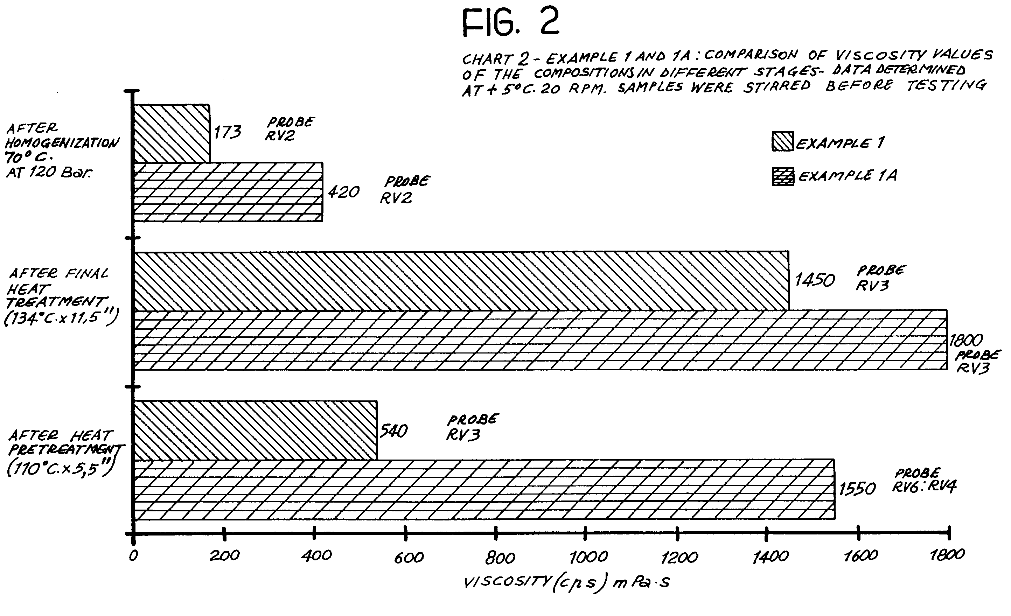

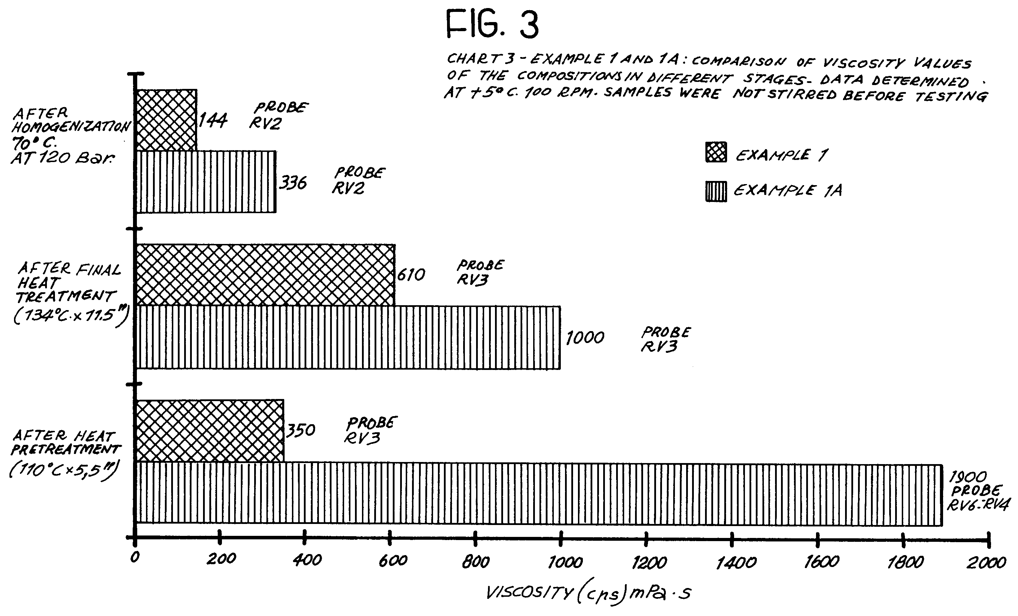

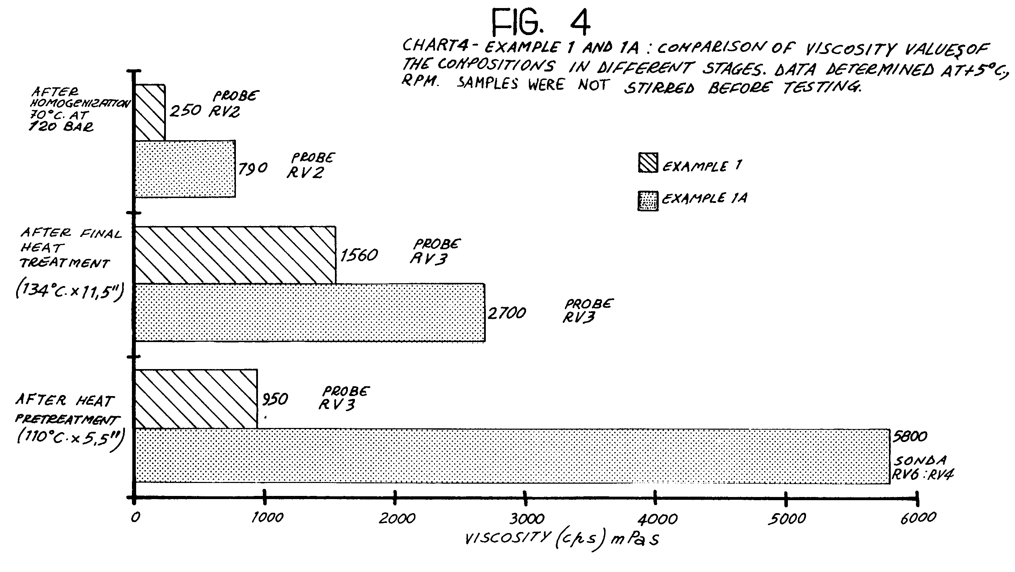

The viscosity of samples taken after the heat pre-treatment, after the final heat treatment and after homogenisation was determined with the use of a Brookfield viscosimeter at +5°C and at 20 and 100 rpm. The results are given in Figures 1 to 4.

The samples tested at +5°C were then rested for 24 hours in a refrigerator at 5°C and their viscosities were measured immediately after their removal from the refrigerator and then after they had been shaken vigorously by hand.

When tested by a panel of tasters, the product thus obtained was deemed to have a full, rounded and entirely satisfactory taste.

### Example 1A

For the purpose of comparison, another mix was prepared with the same ingredients as in Example 1:

| Ingredients | % in dose |
|---|---|
| full-cream milk | 69.1 |
| saccharose | 17 |
| dextrose | 3 |
| fondant | 2 |
| cocoa powder (22% cocoa butter) | 4 |
| egg yolk | 3 |
| skimmed milk powder | 1 |
| P100 carrageen | 0.015 |
| kelgin "F"^{R} | 0.03 |
| Na₂HP0₄ | 0.05 |
| flavourings | to 100 |
| Total fat content | 3.93% |
| Total sugar content | 24.5 % |
| Total protein content | 3.48% |
| Total solid residue | ^{∼} 33% |

The mix described above was subjected to the same processing steps under the same conditions as those described in Example 1 except for the freezing and subsequent liquefaction and degassing.

The product thus obtained was not judged satisfactory by the panel of tasters as it did not have the organoleptic properties of conventional ice cream.

The viscosities of the product after the pre-treatment, final heat treatment and homogenisation, measured in a Brookfield viscosimeter under the same conditions as given for example 1, are given in Figures 1 to 4. A comparison of the values given in Figures 1 to 4 demonstrates how the freezing, liquefaction and degassing are responsible for a substantial variation in viscosity which, in the case of the product of Example 1, is substantially less than that of the product of Example 1A.

It is understood that the product obtained by the process of the invention may be flavoured with different flavours and that its fat content may be varied within the range specified above, according to the desired organoleptic and nutritional characteristics.

### Example 2

Example 2 which follows describes the preparation of a concentrate for a nut flavoured product.

| Ingredients | % by weight |
|---|---|
| full-cream milk | 56.3 |
| sugar | 17.5 |
| dextrose | 6.25 |
| nut paste | 12.5 |
| egg yolk | 6.25 |
| P100 carrageen | 0.37 |
| kelgin "F"^{R} | 0.1 |
| vanillin sol. 1% | 0.025 |
| flavourings | to 100 |
| Total fat content | 12.8% |
| Total sugar content | 27.2% |
| Total protein content | 3.3% |
| Total solid residue: | 42% |

The concentrated basic mix having the composition given above was subjected to the same processing steps as described in Example 1, with the frozen aerated product taken from the freezer and melted by the addition of full-cream milk in a ratio of 1:4. In this case the panel of tasters once again judged the product satisfactory and meeting the desired organoleptic properties.

## Claims

1. A process for the preparation of a liquid food product, having a composition typical of ice cream, including edible fats, proteins, sugars and water, characterised in that it includes the steps of:
- preparing a basic mix including the ingredients mentioned above;
- cooling the mix to below its freezing point while whipping and injecting it with gas until an aerated intermediate product is obtained, and subsequently heating it to above its freezing point and de-aerating it until the intermediate product is once again in a substantially de-aerate liquid state;
- pasteurising or sterilising the product thus obtained, homogenising it and packaging it in aseptic containers.

2. A process according to Claim 1, in which the finished food product has a fat content of from 4 to 18% by weight, a protein content of from 3 to 7% and a sugar content of up to 30% by weight and total solid residue of 28 to 45 % by weight.

3. A process according to Claim 1 in which the finished product has a total solid residue of from 30 to 38% by weight.

4. A process according to any one of Claims 1 to 3, in which the basic mix includes thickening and stabilising agents chosen from the group comprising sodium alginate, propyleneglycol alginate, carrageen, carboxymethyl cellulose, starch, modified starch, pectin and phosphates.

5. A process according to any one of Claims 1 to 4, in which the basic mix is a concentrate having a total solid residue equal to 1.1-1.5 times the total solid residue of the desired finished product and in which an aqueous, edible diluent is added to the intermediate aerated product in sufficient quantity to reduce the total solid residue to the desired final value.

6. A process according to Claim 4, in which the diluent is constituted by full-cream milk and in which the aerated intermediate product is dissolved in this diluent heated to a temperature of between 60 and 85°C.

## Patentansprüche

1. Verfahren zur Herstellung eines flüssigen Nahrungsmittelprodukts mit einer Zusammensetzung, die für Eiscreme typisch ist, einschließlich eßbarer Fette, Proteine, Zucker und Wasser, dadurch gekennzeichnet, daß es die folgenden Schritte einschließt:
- Herstellung einer Grundmischung, die die oben erwähnten Inhaltsstoffe einschließt;
- Kühlung der Mischung auf unterhalb ihres Gefrierpunkts unter Schlagen und Injektion mit Gas, bis ein belüftetes Zwischenprodukt erhalten wird, und anschließend Erwärmung des Produkts oberhalb seines Gefrierpunkts und Entlüftung, bis das Zwischenprodukt wieder in einem im wesentlichen entlüfteten flüssigen Zustand ist;
- Pasteurisierung oder Sterilisierung des so erhaltenen Produkts, Homogenisierung und Verpackung in aseptischen Behältern.

2. Verfahren gemäß Anspruch 1, bei dem das fertige Nahrungsmittelprodukt einen Fettgehalt von 4 bis 18 Gew.-%, einen Proteingehalt von 3 bis 7 % und einen Zuckergehalt von bis zu 30 Gew.-% und eine Gesamttrockenmasse von 28 bis 45 Gew.-% hat.

3. Verfahren gemäß Anspruch 1, wobei das Endprodukt eine Gesamttrockenmasse von 30 bis 38 Gew.-% hat.

4. Verfahren gemäß einem der Ansprüche 1 bis 3, bei dem die Grundmischung Verdickungs- und Stabilisierungsmittel einschließt, die aus der Gruppe, umfassend Natriumalginat, Propylenglykolalginat, Carrageen, Carboxmethylcellulose, Stärke, modifizierte Stärke, Pektin und Phosphate, ausgewählt werden.

5. Verfahren gemäß einem der Ansprüche 1 bis 4, bei dem die Grundmischung ein Konzentrat mit einer Gesamttrockenmasse ist, die dem 1,1 bis 1,5-fachen der Gesamttrockenmasse des gewünschten Endprodukts entspricht und bei dem ein wäßriges eßbares Verdünnungsmittel zu dem belüfteten Zwischenprodukt in einer ausreichenden Menge zugegeben wird, um die Gesamttrockenmasse auf den gewünschten Endwert zu verringern.

6. Verfahren gemäß Anspruch 4, bei dem das Verdünnungsmittel aus Vollmilch besteht und bei dem das belüftete Zwischenprodukt in diesem Verdünnungsmittel, das auf eine Temperatur von zwischen 60 und 85°C erwärmt ist, gelöst wird.

## Revendications

1. Procédé pour la préparation d'un produit alimentaire liquide, ayant une composition typique de la crème glacée, comprenant des matières grasses comestibles, des protéines, des sucres et de l'eau, caractérisé en ce qu'il comprend les phases consistant à :
- préparer un mélange de base comprenant les ingrédients précités ;
- refroidir le mélange jusqu'à une température inférieure à son point de congélation tout en le fouettant et en lui injectant du gaz jusqu'à ce qu'un produit intermédiaire aéré soit obtenu, puis le chauffer jusqu'à une température supérieure à son point de congélation et le désaérer jusqu'à ce que le produit intermédiaire soit de nouveau dans un état liquide sensiblement désaéré ;
- pasteuriser ou stériliser le produit ainsi obtenu, l'homogénéiser et le conditionner dans des récipients aseptiques.

2. Procédé selon la revendication 1, dans lequel le produit alimentaire fini a une teneur en matières grasses de 4 à 18 % en poids, une teneur en protéines de 3 à 7 % et une teneur en sucres jusqu'à 30 % en poids et un total de résidus solides de 28 à 45 % en poids.

3. Procédé selon la revendication 1, dans lequel le produit fini a un total de résidus solides de 30 à 38 % en poids.

4. Procédé selon l'une quelconque des revendications 1 à 3, dans lequel le mélange de base comprend des agents épaississeurs et stabilisateurs sélectionnés parmi le groupe consistant en alginate de sodium, alginate de propylèneglycol, carragheen, cellulose carboxyméthylique, amidon, amidon modifié, pectine et phosphates.

5. Procédé selon l'une quelconque des revendications 1 à 4, dans lequel le mélange de base est un concentré comportant un total de résidus solides égal à 1,1-1,5 fois le total de résidus solides du produit fini souhaité, et dans lequel un diluant aqueux, comestible, est ajouté au produit intermédiaire aéré en une quantité suffisante pour réduire le total de résidus solides à la valeur finale souhaitée.

6. Procédé selon la revendication 4, dans lequel le diluant est constitué de lait entier, et dans lequel le produit intermédiaire aéré est dissous dans le diluant porté à une température comprise entre 60 et 85°C.
